# EUROPÄISCHE PATENTSCHRIFT

(11) **EP 0 797 511 B1**
(45) Veröffentlichungstag und Bekanntmachung des Hinweises auf die Patenterteilung: **11.08.1999**
(21) Anmeldenummer: 95919380.6
(22) Anmeldetag: 03.05.1995
(51) Int. Cl.: B41M 1/30, B41M 5/24

(54) **LASERMARKIERBARE KUNSTSTOFFE**
LASER-MARKABLE PLASTICS
MATIERES PLASTIQUES MARQUABLES PAR LASER

(30) Priorität: 05.05.1994 DE 4415802
(43) Veröffentlichungstag der Anmeldung: 01.10.1997
(73) Patentinhaber: MERCK PATENT GmbH, 64293 Darmstadt (DE); BASF AKTIENGESELLSCHAFT, 67056 Ludwigshafen (DE)
(72) Erfinder: LINZMEIER, Rainer, D-64846 Gross-Zimmern (DE); KRIETSCH, Burkhard, D-64807 Dieburg (DE); PRISSOK, Frank, D-49448 Lemförde (DE)
(86) Internationale Anmeldenummer: EP9501672
(87) Internationale Veröffentlichungsnummer: WO9530546

(56) Entgegenhaltungen:
- EP-A- 0 447 032
- EP-A- 0 459 552
- DATABASE WPI Week 9243, Derwent Publications Ltd., London, GB; AN 92-354235 & JP,A,4 257 308 (UNITKA LTD) 11. September 1992
- DATABASE WPI Week 9151, Derwent Publications Ltd., London, GB; AN 91-372385 & JP,A,3 249 214 (UNITKA LTD) 7. November 1991

## Beschreibung

Die vorliegende Erfindung betrifft lasermarkierbare Kunststoffe, die sich dadurch auszeichnen, daß sie Pigmente, mit einer Schicht aus dotiertem Zinndioxid enthalten.

Die Kennzeichnung von Produktionsgütern wird in fast allen Industriezweigen zunehmend wichtiger. So müssen häufig zum Beispiel Produktionsdaten, Verfallsdaten, Barcodes, Firmenlogos, Seriennummern etc. aufgebracht werden. Derzeit werden diese Markierungen überwiegend mit konventionellen Techniken wie Drucken, Prägen, Stempeln und Etikettieren ausgeführt. Wachsende Bedeutung gewinnt aber die berührungslose, sehr schnelle und flexible Markierung mit Lasern, insbesondere bei Kunststoffen. Mit dieser Technik ist es möglich graphische Beschriftungen, wie z.B. Barcodes, mit hoher Geschwindigkeit auch auf eine nicht plane Oberfläche aufzubringen. Da sich die Beschriftung im Kunststoffkörper selbst befindet, ist sie dauerhaft und abriebbeständig.

Viele Kunststoffe, wie z.B. Polyolefine und Polystyrole, lassen sich bisher nur schwierig oder überhaupt nicht mit Laser markieren. Ein CO₂-Laser der Licht im Infrarotbereich bei 10,6 µm aussendet, bewirkt bei Polyolefinen und Polystyrolen selbst bei sehr hohen Leistungen nur eine schwache, kaum lesbare Markierung. Im Falle der Elastomeren Polyurethan und Polyetherestern tritt mit Nd-YAG-Lasern keine Wechselwirkung, bei CO₂-Lasern eine Gravur auf. Der Kunststoff darf das Laserlicht nicht völlig reflektieren oder durchlassen, da es dann zu keiner Wechselwirkung kommt. Es darf aber auch nicht zu einer starken Absorption kommen, da in diesem Fall der Kunststoff verdampft und nur eine Gravur zurückbleibt. Die Absorption der Laserstrahlen und somit die Wechselwirkung mit der Materie ist abhängig von dem chemischen Aufbau des Kunststoffes und der verwendeten Wellenlänge des Lasers. Vielfach ist es notwendig, damit Kunststoffe laserbeschriftbar werden, entsprechende Zusatzstoffe, z.B. Absorbar, zuzugeben.

Für die Laserkennzeichnung von Kunststoffen werden neben CO₂-Lasern zunehmend Nd-YAG-Laser verwendet. Die üblicherweise verwendeten YAG-Laser geben einen gepulsten Energiestrahl mit einer charakteristischen Wellenlänge von 1064 nm oder 532 nm ab. Das Absorbermaterial muß in diesem speziellen NIR-Bereich eine ausgeprägte Absorption zeigen, um bei den schnellen Beschriftungsvorgängen eine ausreichende Reaktion zu zeigen.

Aus der DE-OS 29 36 926 ist bekannt, die Beschriftung eines polymeren Materials mittels Laserlicht dadurch zu erzielen, daß man dem Kunststoff einen sich bei der Einwirkung von Energiestrahlung verfärbenden Füllstoff wie Ruß oder Graphit beimischt.

In der EP 0 400 305 A2 werden mit Laserlicht beschriftbare hochpolymere Materialien beschrieben, die als verfärbenden Zuschlagstoff Kupfer(II)hydroxidphosphat oder Molybdän(VI)oxid enthalten.

Eine schwarzpigmenthaltige Kunststoff-Formmasse auf Basis eines organischen thermoplastischen Polymers, die durch Einwirkung von Laser-Strahlung mit Zeichen versehen werden kann, ist aus der EP 0 522 370 A1 bekannt.

Die aus dem Stand der Technik bekannten Füllstoffe besitzen aber alle den Nachteil, daß sie den zu beschriftenden Kunststoff nachhaltig einfärben und folglich die Laserbeschriftung, die üblicherweise eine dunkle Schrift auf einem helleren Untergrund ist, dann nicht mehr ausreichend kontrastreich ist.

Der Füllstoff bzw. das erfolgreiche Absorptionsmittel sollte daher eine sehr helle Eigenfarbe besitzen oder nur in sehr geringen Mengen eingesetzt werden müssen. Derartige Kriterien erfüllt das Kontrastmittel Antimontrioxid. In der US 4,816,374 wird Antimontrioxid zur Laserbeschriftung mittels Nd-YAG-Lasern in thermoplastischen Elastomeren eingesetzt. Es wird in Abhängigkeit vom Matrixmaterial und der Schreibgeschwindigkeit des Lasers in einer Konzentration von 3 bis 8 % eingesetzt. Mit Cadmium und Arsenverbindungen sind Lasermarkierungen möglich, derartige Substanzen werden jedoch aufgrund ihrer Toxizität nicht mehr verwendet.

Aufgabe der vorliegenden Erfindung war es daher lasermarkierbare Kunststoffe zu finden, die unter Einwirkung von Laserlicht eine Markierung mit hohem Kontrast ermöglichen und nur geringe Mengen Schwermetalle enthalten.

Überraschenderweise wurde gefunden, daß thermoplastische Kunststoffe, die Pigmente, die eine Schicht aus, z.B. mit Antimon, dotiertem Zinndioxid aufweisen, enthalten, eine kontrastreiche und kantenscharfe Markierung ermöglichen.

Gegenstand der Erfindung sind daher lasermarkierbare thermoplastische Kunststoffe, dadurch gekennzeichnet, daß sie Pigmente auf Basis von plättchenförmigen Substraten, die eine Schicht aus dotiertem Zinndioxid aufweisen, enthalten.

Durch den Zusatz der Pigmente in Konzentrationen von 0,1 bis 4 Gew.% bezogen auf das Kunststoffsystem, vorzugsweise 0,5 bis 2,5 Gew.% und insbesondere 0,3 bis 2 Gew.% wird bei der Lasermarkierung ein Kontrast erreicht, der dem eines Kunststoffes mit konzentrationsmäßig deutlich mehr Antimontrioxid entspricht oder sogar überlegen ist. Die Konzentration der Pigmente im Kunststoff ist allerdings abhängig von dem eingesetzten Kunststoffsystem. Der geringe Pigmentanteil verändert das Kunststoffsystem unwesentlich und beeinflußt nicht dessen Verarbeitbarkeit

Die Zinndioxidschicht der Pigmente ist vorzugsweise mit Antimon, Arsen, Wismuth, Kupfer, Gallium oder Germanium, insbesondere mit Antimon, oder den entsprechenden Oxiden dotiert. Die Dotierung kann 0,5-50 Gew.%, vorzugsweise 0,5-40 Gew.%, insbesondere 0,5-20 Gew.% bezogen auf das Zinndioxid betragen. Bei der Zinndioxidschicht kann es sich um eine leitfähige oder nicht leitfähige Schicht handeln.

Transparente Thermoplaste mit derartigen Pigmenten in Reineinfärbung dotiert zeigen ein leicht metallisches Schimmern, behalten aber ihre Transparenz. Durch den Zusatz von 0,2 bis 10 Gew.%, vorzugsweise 0,5 bis 3 Gew.% an deckenden Pigmenten, wie z.B. Titandioxid, kann dieser metallische Glanz, insbesondere bei thermoplastischen Polyurethan, bei Bedarf völlig überdeckt werden. Ferner können den Kunststoffen Farbpigmente zugesetzt werden, die farbliche Variationen jeder Art zulassen und gleichzeitig eine Beibehaltung der Lasermarkierung gewährleisten.

Die für die Markierung geeigneten Pigmente sowie deren Herstellungsverfahren werden z.B. in der DE-OS 38 42 330 und der EP 0 139 557 beschrieben. Die Pigmente basieren auf plättchenförmigen, vorzugsweise transparenten oder semitransparenten Substraten aus z.B. Schichtsilikaten wie etwa Glimmer, Talkum, Kaolin, Glas, SiO₂-Flakes, synthetische oder Keramikflakes oder synthetischen trägerfreien Plättchen. Daneben kommen auch Metallplättchen wie z.B. Aluminiumplättchen oder plättchenförmige Metalloxide wie z.B. Eisenoxid oder Wismutoxichlorid in Betracht. Besonders bevorzugt als Substrat sind mit ein oder mehreren Metalloxiden beschichtete Glimmerschuppen. Als Metalloxide werden dabei sowohl farblose hochbrechende Metalloxide wie insbesondere Titandioxid und/oder Zirkoniumdioxid verwendet als auch farbige Metalloxide wie z.B. Chromoxid, Nickeloxid, Kupferoxid, Kobaltoxid und insbesondere Eisenoxide.

Das Aufbringen der Zinndioxidschicht auf das Substrat geschieht in an sich bekannter Weise, zum Beispiel nach dem in der EP 0 139 557 beschriebenen Verfahren. Die Schicht aus mit Antimon, Arsen, Wismuth, Kupfer, Gallium oder Germanium dotiertem Zinndioxid wird in einer Menge von etwa 25-100 %, insbesondere in einer Menge von etwa 50-75 % auf das plättchenförmige Substrat aufgebracht.

Für die Lasermarkierung besonders geeignet sind Pigmente auf Basis von plättchenförmigen Metalloxiden oder mit ein oder mehreren Metalloxiden beschichteten plättchenförmige Substrate, vorzugsweise Glimmer. Insbesondere geeignet sind Pigmente, die sich dadurch auszeichnen, daß das Basissubstrat zunächst mit einer gegebenenfalls hydratisierten Siliziumdioxidschicht beschichtet wird, bevor die dotierte Zinndioxidschicht aufgebracht wird. Derartige Pigmente werden in der DE 38 42 330 beschrieben. In diesem Fall wird das Substrat in Wasser suspendiert und bei einem geeigneten pH-Wert wird die Lösung eines löslichen Silikats zugegeben, wobei gegebenenfalls durch gleichzeitige Zugabe von Säure der pH-Wert im geeigneten Bereich gehalten wird. Das mit Kieselsäure beschichtete Substrat kann vor der anschließenden Beschichtung mit der Zinndioxidschicht aus der Suspension abgetrennt und aufgearbeitet werden oder direkt mit der dotierten Zinndioxidschicht belegt werden.

Alle bekannten thermoplastischen Kunststoffe wie sie z.B. im Ullmann, Bd. 15, S. 457 ff., Bd. 15, Verlag VCH beschrieben werden, können für die Lasermarkierung Anwendung finden. Geeignete Kunststoffe sind z.B. Polyethylen, Polypropylen, Polyamide, Polyester, Polyesterester, Polyetherester, Polyphenylenether, Polyacetal, Polybutylenterephthalat, Polymethylmethacrylat, Polyvinylacetal, Polystyrol, Acrylnitril-Butadien-Styrol (ABS), Acrylnitril-Styrol-Acrylester (ASA), Polycarbonat, Polyethersulfone, Polyetherketone sowie deren Copolymeren und/oder Mischungen. Insbesondere geeignet sind thermoplastische Polyurethane (TPU) aufgrund ihrer hochwertigen mechanischen Eigenschaften und den kostengünstigen Verarbeitungsmethoden. Thermoplastische Polyurethane sind seit langen aus zahlreichen Literaturveröffentlichungen und Patentschriften, z.B. aus der GB 1 057 018 oder EP 0 564 931, bekannt.

Die Einarbeitung der Pigmente in den thermoplastischen Kunststoff erfolgt, indem das Kunststoffgranulat mit dem Pigment gemischt und dann unter Wärmeeinwirkung verformt wird. Dem Kunststoffgranulat können bei der Einarbeitung der Pigmente gegebenenfalls Haftmittel, organische polymerverträgliche Lösungsmittel, Stabilisatoren und/oder unter den Arbeitsbedingungen temperaturstabile Tenside zugesetzt werden. Die Herstellung der KunststoffgranulallPigment-Mischung erfolgt in der Regel so, daß in einem geeigneten Mischer das Kunststoffgranulat vorgelegt, mit eventuellen Zusätzen benetzt und danach das Pigment zugesetzt und untergemischt wird. Die Pigmentierung des Kunststoffes erfolgt in der Regel über ein Farbkonzentrat (Masterbatch) oder Compound. Die so erhaltene Mischung kann dann direkt in einem Extruder oder einer Spritzgießmachine verarbeitet werden. Die bei der Verarbeitung gebildeten Formkörper zeigen eine sehr homogene Verteilung des Pigments. Anschließend findet die Lasermarkierung statt.

Gegenstand der Erfindung ist auch ein Verfahren zur Herstellung der erfindungsgemäßen lasermarkierbaren Kunststoffe, dadurch gekennzeichnet, daß ein thermoplastischer Kunststoff mit dem Pigment gemischt und dann unter Wärmeeinwirkung verformt wird.

Die Beschriftung mit dem Laser erfolgt derart, daß der Probenkörper in den Strahlengang eines gepulsten Lasers, vorzugsweise eines Nd-YAG-Lasers gebracht wird. Ferner ist eine Beschriftung mit einem Excimer-Laser, z.B. über eine Maskentechnik, möglich. Jedoch sind auch mit anderen herkömmlichen Lasertypen, die eine Wellenlänge in einem Bereich hoher Absorption des verwendeteten Pigments aufweisen, die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermitteit werden.

Die Verwendung des erfindungsgemäßen pigmentierten Kunststoffes kann auf allen Gebieten erfolgen, wo bisher übliche Druckverfahren zur Beschriftung von Kunststoffen eingesetzt werden. Beispielsweise können Formkörper aus dem erfindungsgemäßen Kunststoff in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäßen Kunststoff bestehen, können selbst an schwer zugänglichen Stellen mit Hilfe von Laserlicht markiert werden. Weiterhin kann das erfindungsgemäße Kunststoffsystem aufgrund seines geringen Schwermetallanteils bei Verpackungen im Lebensmittelbereich oder im Spielzeugbereich eingesetzt werden. Die Markierungen auf den Verpackungen zeichnen sich dadurch aus, daß sie wisch- und kratzfest, stabil bei nachträglichen Sterilisationsprozessen, und hygienisch rein beim Markierungsprozeß aufbringbar sind. Komplette Etikettenbilder können dauerhaft auf die Verpackung für ein Mehrwegsystem aufgebracht werden. Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können dann bei Bedarf wieder mit Hilfe eines Scanners abgerufen werden. Die Beschriftung muß sehr dauerhaft werden, da die Marken teilweise über mehrere Jahre an den Tieren verbleiben.

Die Lasermarkierung von Kunststoffgegenständen bzw. Formkörpern, die aus dem erfindungsgemäßen Kunststoff bestehen, ist somit möglich.

Die folgenden Beispiele sollen die Erfindung erläutern ohne sie jedoch zu begrenzen. Die angegebenen Prozentangaben sind Gewichtsprozent.

### Beispiele

### Beispiel 1

Es werden gelbe Spritzgußkörper aus einem thermoplastischen Polyether-Polyurethan der Shore Härte 85A, auf der Basis von 1000 Teilen Polytetrahydrofuran mit einem Molekulargewicht von 1000, 600 Teilen MDI (Methylendiphenyl-4,4'-diisocyanat) und 126 Teilen 1,4-Butandiol, hergestellt, die 1 % des Glimmerpigments Minatec® 31 CM (TiO₂-Glimmerpigment mit einer Antimon dotierten Zinndioxidschicht, Handels-produkt der Fa. E. Merck, Darmstadt), 0,6 % Titandioxid und 0,25 % Chinophtalongelb (Paloithol® K 0691 der Fa. BASF) enthalten. Die Pigmente werden in Form von Konzentraten in Polyether-TPU von dem Abspritzvorgang zugegeben. Nach der Beschriftung mit einem Nd-YAG-Laser bei einer Stromstärke von 15 A und einer Schreibgeschwindigkeit von 400 mm/s zeigen die Platten eine deutliche, abriebfeste Beschriftung. Die Reflexionswerte, gemessen mit einem PSC Quick-Check 300 und einem 670 nm Lesestift, betragen 66 % auf der Matrix und 21 % auf beschrifteten Stellen. Ein Barcode ist problemlos lesbar.

| Mechanische Eigenschaften | | | |
|---|---|---|---|
| Zugfestigkeit/MPa DIN 53504 | Bruchdehnung/% DIN 53504 | Shore A Härte DIN 53505 | Abrieb/mm³ DIN 53516 |
| 50 | 650 | 85 | 30 |

### Beispiel 2

Es werden orange Spritzgußkörper aus einem thermoplastischen Polyether-Polyurethan der Shore Härte 90A, auf der Basis von 1000 Teilen Polytetrahydrofuran mit einem Molekulargewicht von 1000, 700 Teilen MDI und 162 Teilen 1,4 Butandiol, hergestellt, die 1 % des Glimmerpigmentes Minatec® 30 CM (SiO₂-beschichtetes TiO₂-Glimmerpigment mit einer Antimon dotierten Zinndioxidschicht, Handelsprodukt der Fa. Merck, Darmstadt), 0,6 % Titandioxid, 0,5 % Bleichromatpigment (Krolorgelb 787 D) und 0,1 % Bleimolybdatpigment (Krolororange 789 D) enthalten. Die Pigmente werden in Form von Konzentraten in Polyether TPU vor dem Abspritzvorgang zugegeben.

Die Beschriftung mit einem Nd-YAG-Laser bei 13 Ampere, 5 kHz Pulsfrequenz und 600 mm/s ist kontrastreich und abriebfest.

Die Reflexionswerte mit dem PSC 300 betragen auf der Matrix 56 %, auf beschrifteten Stellen 25 %.

### Beispiel 3

Es werden orange Spritzgußkörper aus einem thermoplastischen Polyether-Polyurethan der Shore Härte 95A, auf der Basis von 1000 Teilen Polytetrahydrofuran mit einem Molekulargewicht von 1000, 830 Teilen MDI und 209 Teilen 1,4-Butandiol, und 2 % eines UV-Stabilisatorkonzentrates hergestellt. Die Platten enthalten außerdem 1 % des Glimmerpigmentes Minatec® 31 CM, 0,6 % Titandioxid und 0,25 % Chinophtalongelb und 0,02 % des Azopigmentes Paliotolgelb K 2270. Die Pigmente werden in Form von Konzentraten in Polyether TPU vor dem Abspritzvorgang zugegeben.

Die Beschriftung mit einem Nd-YAG-Laser bei 18 Ampere und 600 mm/s ist kontrastreich und abriebfest.

Die Reflexionswerte mit dem PSC 300 betragen auf der Matrix 67 %, auf beschrifteten Stellen 24 %.

### Beispiel 4

Es werden weiße Spritzgußkörper aus einem Polyether-Polyurethan der Shore Härte 90A, hergestellt, die 1 % des Glimmerpigmentes Minatec® 31 CM und 1 % Titandioxid enthalten. Die Pigmente werden in Form von Konzentraten in Polyether TPU vor dem Abspritzvorgang zugegeben.

Die Beschriftung mit einem Nd-YAG-Laser bei 14 Ampere, 5 kHz Pulsfrequenz und 400 mm/s ist kontrastreich und abriebfest.

Die Reflexionswerte mit dem PSC 300 betragen auf der Matrix 68 %, auf beschrifteten Stellen 28 %.

### Beispiel 5

Es werden gelbe Spritzgußkörper aus einem Polyetherester der Shore Härte 42D, auf der Basis von Polytetrahydrofuran und Polybutylentherephthalat hergestellt. Die Platten enthalten 1 % des Glimmerpigmentes Minatec® 31 CM, 0,6 % Titandioxid und 0,25 % Chinophtalongelb. Die Pigmente werden in Form von Konzentraten vor dem Abspritzvorgang zugegeben.

Mittels eines Nd-YAG-Lasers wird eine kontrastreiche Beschriftung aufgebracht.

### Beispiel 6

Es werden gelbe Spritzgußkörper aus einem Polyesterester, auf der Basis von Polybutylentherephthalat und Polycaprolacton, der Shore Härte 55D hergestellt. Die Platten enthalten 1,5 % des Glimmerpigmentes Minatec® 31 CM, 0,6 % Titandioxid und 0,25 % Chinophtalongelb. Die Pigmente werden in Form von Konzentraten vor dem Abspritzvorgang zugegeben.

Mittels eines Nd-YAG-Lasers wird eine kontrastreiche Beschriftung aufgebracht.

### Beispiel 7

Es werden orange Spritzgußkörper aus einem Polyester-Polyurethan der Shore Härte 90A, auf der Basis von 100 Teilen Poly-(1,4-butandiol)-hexan-1,6-dioladipat mit einem Molekulargewicht von 2000, 580 Teilen MDI und 162 Teilen 1,4-Butandiol, hergestellt, die 1,5 % des Glimmerpigmentes Minatec® 30 CM, 0,6 % Titandioxid, 0,5 % Bleichromatpigment (Krolorgelb 787 D) und 0,1 % Bleimolybdatpigment (Krolororange 789 D) enthalten. Die Pigmente werden in Form von Konzentraten in Polyether TPU vor dem Abspritzvorgang zugegeben.

Die Beschriftung mittels eines Nd-YAG-Lasers ist dauerhaft und kontrastreich.

### Beispiel 8

Auf Steckern, hergestellt aus einer Formmasse, die aus Polyamid (Ultramid® A3K BASF, Ludwigshafen) und 0,3 % Minatec® 30 CM besteht, wird eine dunkle Beschriftung auf weißen Untergrund erzeugt. Die Beschriftung mittels eines Nd-YAG-Lasers führt zu sauberen und glatten Schriftbildem. Im Polyamid zeigt sich deutlich der nahe am Pigment stattfindende Farbumschlag ohne wesentliche Veränderung des Polymers.

### Beispiel 9

Auf Lichtschaltern, hergestellt aus einer Formmasse, die aus Polyacetal (Hostaform® C902, der Fa. Hoechst) und 1 % Minatec® 31 CM besteht, wird eine graue Markierung mit dem Nd-YAG-Laser auf weißen Untergrund erzeugt.

### Beispiel 10

Auf Folien bestehend aus Polypropylen (PPH10 der Fa. DSM) und 1 % Minatec® 30 CM wird eine kantenscharfe Markierung mit dem Nd-YAG-Laser erzeugt, wobei das Trägermaterial keine Aufschäumeffekte zeigt.

### Vergleichsbeispiel 1

Es werden gelbe Spritzgußkörper aus einem thermoplastischen Polyether-Polyurethan der Shore Härte 95A, auf der Basis von 1000 Teilen Polytetrahydrofuran mit einem Molekulargewicht von 1000, 830 Teilen MDI und 209 Teilen 1,4-Butandiol, und 2 % eines UV-Stabilisatorkonzentrates hergestellt. Die Platten enthalten außerdem 0,6 % Titandioxid und 0,25 % Chinophthalongelb und 0,02 % des Azopigmentes Paliotolgelb K 2270. Die Pigmente werden in Form von Konzentraten in Polyether TPU vor dem Abspritzvorgang zugegeben.

Die Zusammensetzung und Einfärbung entspricht dem Beispiel 3, das Laserkontrastmittel fehlt aber. Eine Beschriftung mit einem Nd-YAG-Laser ist nicht möglich.

### Vergleichsbeispiel 2

Es werden gelbe Spritzgußkörper aus einem thermoplastischen Polyether-Polyurethan der Shore Härte 95A, auf der Basis von 1000 Teilen Polytetrahydrofuran mit einem Molekulargewicht von 1000, 830 Teilen MDI und 209 Teilen 1,4-Butandiol, und 2 % eines UV Stabilisatorkonzentrates hergestellt. Die Platten enthalten außerdem 5 % Antimontrioxid, 0,6 % Titandioxid und 0,25 % Chinophthalongelb und 0,02 % des Azopigmentes Paliotholgelb K 2270. Die Pigmente werden in Form von Konzentraten in Polyether TPU vor dem Abspritzvorgang zugegeben.

Die Zusammensetzung und Einfärbung entspricht bis auf das Laserkontrastmittel dem Beispiel 3, bzw. dem Vergleichsbeispiel 1.

Die Beschriftung wird mit einem Nd-YAG-Laser bei 18 Ampere und 600 mm/s vorgenommen.

Die Reflexionswerte mit dem PSC 300 betragen auf der Matrix 69 %, auf beschrifteten Stellen 22 %.

## Patentansprüche

1. Lasermarkierbare thermoplastische Kunststoffe,dadurch gekennzeichnet, daß sie Pigmente auf Basis von plättchenförmigen Substraten, die eine Schicht aus dotiertern Zinndioxid aufweisen, enthalten.

2. Lasermarkierbare Kunststoffe nach Anspruch 1, dadurch gekennzeichnet, daß das Pigment als plättchenförmiges Substrat Glimmerplättchen, SiO₂-Flakes oder mit ein oder mehreren Metalloxiden beschichtete Glimmerplättchen enthält.

3. Lasermarkierbare Kunststoffe nach Anspruch 1 oder 2, dadurch gekennzeichnet, daß das Pigment ein plättchenförmiges Substrat enthält, welches mit einer gegebenenfalls hydratisierten Siliziumdioxidschicht oder einer Schicht eines anderen unlöslichen Silikats beschichtet ist.

4. Lasermarkierbare Kunststoffe nach den Ansprüchen 1 bis 3, dadurch gekennzeichnet, daß der Anteil an Pigmenten 0,1-4 Gew.%, bezogen auf das Kunststoffsystem, beträgt.

5. Lasermarkierbare Kunststoffe nach den Ansprüchen 1 bis 4, dadurch gekennzeichnet, daß die Zinndioxidschicht der Pigmente mit 0,5-50 Gew.% an Antimon, Arsen, Wismuth, Kupfer, Gallium, Germanium oder den entsprechenden Oxiden dotiert ist.

6. Lasermarkierbare Kunststoffe nach Anspruch 1, dadurch gekennzeichnet, daß der thermoplastische Kunststoff ein Polyurethan ist.

7. Lasermarkierbare Kunststoffe nach Anspruch 1, dadurch gekennzeichnet, daß der Kunststoff ein Polyetherester oder Polyesterester ist.

8. Lasermarkierbare Kunststoffe nach Anspruch 1, dadurch gekennzeichnet, daß sie zusätzlich Farbpigmente enthalten.

9. Verfahren zur Herstellung von lasermarkierbaren Kunststoffen nach Anspruch 1, dadurch gekennzeichnet, daß ein thermoplastisches Kunststoffgranulat mit dem Pigment gemischt und dann unter Wärmewirkung verformt wird.

10. Verwendung der lasermarkierbaren Kunststoffe nach Anspruch 1 als Material zur Herstellung von Formkörpern, die mit Hilfe von Laser-Strahlung markiert werden.

11. Formkörper bestehend aus dem lasermarkierbaren Kunststoff nach Anspruch 1.

## Claims

1. Laser-markable thermoplastics, characterized in that they contain pigments based on platelet-shaped substrates having a coating of doped tin dioxide.

2. Laser-markable plastics according to Claim 1, characterized in that the pigment contains, as platelet-shaped substrate, mica platelets, SiO₂ flakes or mica platelets coated with one or more metal oxides.

3. Laser-markable plastics according to Claim 1 or 2, characterized in that the pigment contains a platelet-shaped substrate which has been coated with an optionally hydrated silicon dioxide coating or a coating of another insoluble silicate.

4. Laser-markable plastics according to Claims 1 to 3, characterized in that the proportion of pigments is 0.1-4% by weight, based on the plastics system.

5. Laser-markable plastics according to Claims 1 to 4, characterized in that the tin dioxide coating of the pigments is doped with 0.5-50% by weight of antimony, arsenic, bismuth, copper, gallium, germanium or the corresponding oxides.

6. Laser-markable plastics according to Claim 1, characterized in that the thermoplastic is a polyurethane.

7. Laser-markable plastics according to Claim 1, characterized in that the plastic is a polyether ester or polyester ester.

8. Laser-markable plastics according to Claim 1, characterized in that they additionally contain coloured pigments.

9. Process for the preparation of laser-markable plastics according to Claim 1, characterized in that thermoplastic granules are mixed with the pigment and then moulded at elevated temperature.

10. Use of the laser-markable plastics according to Claim 1 as material for the production of mouldings which are marked with the aid of laser radiation.

11. Mouldings comprising the laser-markable plastic according to Claim 1.

## Revendications

1. Matières synthétiques thermoplastiques pouvant être marquées au laser, caractérisées en ce qu'elles contiennent des pigments à base de substrats lamellaires, présentant une couche de dioxyde d'étain dopé.

2. Matières synthétiques pouvant être marquées au laser selon la revendication 1, caractérisées en ce que le pigment contient comme substrat lamellaire des lamelles de mica, des paillettes de SiO₂ ou des lamelles de mica revêtues d'un ou plusieurs oxydes métalliques.

3. Matières synthétiques pouvant être marquées au laser selon la revendication 1 ou 2, caractérisées en ce que le pigment contient un substrat lamellaire revêtu d'une couche de dioxyde de silicium éventuellement hydraté ou d'une couche d'un autre silicate insoluble.

4. Matières synthétiques pouvant être marquées au laser selon les revendications 1 à 3, caractérisées en ce qu'elles contiennent 0,1 à 4 % en poids de pigments rapporté au système matières synthétiques.

5. Matières synthétiques pouvant être marquées au laser selon les revendications 1 a 4, caractérisées en ce que la couche de dioxyde d'étain des pigments est dotée de 0,5 à 50 % en poids d'antimoine, d'arsenic, de bismuth, de cuivre, de gallium, de germanium ou des oxydes correspondants.

6. Matières synthétiques pouvant être marquées au laser selon la revendication 1, caractérisées en ce que la matière synthétique thermoplastique est un polyuréthane.

7. Matières synthétiques pouvant être marquées au laser selon la revendication 1, caractérisées en ce que la matière synthétique est un polyétherester ou un polyesterester.

8. Matières synthétiques pouvant être marquées au laser selon la revendication 1, caractérisées en ce qu'elles contiennent en plus des pigments colorés.

9. Procédé pour la préparation des matières synthétiques pouvant être marquées au laser selon la revendication 1, caractérisé en ce que des granulés de matière synthétique thermoplastique sont mélangés avec le pigment, puis mis en forme sous l'action de la chaleur.

10. Utilisation des matières synthétiques pouvant être marquées au laser selon la revendication 1 comme matériau pour la fabrication de corps moulés marqués à l'aide d'un rayonnement laser.

11. Corps moulé constitué de la matière synthétique pouvant être marquée au laser selon la revendication 1.
